# EUROPEAN PATENT APPLICATION

(11) **EP 1 586 935 A2**
(43) Date of publication of application: **19.10.2005**
(21) Application number: 05252204.2
(22) Date of filing: 07.04.2005
(51) Int. Cl.: G02F 1/13

(54) **Liquid crystal display device**

(30) Priority: 09.04.2004 JP 2004115877
(71) Applicant: ORION ELECTRIC CO., Ltd., Takefu-City, Fukui 915-8555 (JP)
(72) Inventor: Akagawa, Kouji, c/o Orion Electric Co. Ltd., Takefu-city, Fukui 915-8555 (JP); Nishida, Kazufumi, c/o Orion Electric Co. Ltd., Takefu-city, Fukui 915-8555 (JP); Yonezu,Yoshikazu, c/o Orion Electric Co. Ltd., Takefu-city, Fukui 915-8555 (JP)
(74) Representative: Paget, Hugh Charles Edward

(57) **Abstract**

Three liquid crystal display panels (10A;10B;10C), which have substantially the same display size but differ in thickness, are mounted in three different covers (2) with screws (20A;20B;20C). One of the three covers is fixed to the inner side of the cabinet (4) of a LCD device (8). One of the LCD panels (10B) is side mounted. The side mounted LCD panel has screw holes (13B) at two sides, and the screws (20B) are inserted in holes (18B) formed in the cover. A thin LCD panel is mounted by inserting the screws (20A) in holes (18A), which are formed in folded lugs (14) of the thin panel, and by screwing into screw holes (13A), which are made in mounting lugs (17) folded in the perimeter wall (16) of the cover that contact the folded lug. A thick LCD panel (10C) has mounting holes (22) wherein the screws (20C) are inserted, and the screw holes are formed in cylindrical members (24). The cylindrical members are of brass and are swaged to holes (23) in a flat plate (15) of the cover.

## Description

### BACKGROUND OF THE INVENTION

### Field of the invention

The present invention relates to a liquid crystal display device designed to fix a plurality of liquid crystal display panels of different mounting specifications to amounting cabinet using a common mounting cover.

### Description of the related art

In recent years, a liquid crystal display panel is used as a display screen for a notebook or a desktop personal computer or a television device. For this type of liquid crystal display device, it is often the case that a multiple types of LCD manufactured by a plurality of manufacturers are mounted in a single cabinet. As a method of mounting such multiple types of LCD in one type of cabinet, for example, Japanese Patent Laid-Open Publication No.2001-83486 (Patent Document 1) discloses a liquid crystal display panel mounting device which provides LCD screw holes and a plurality of types of fittings corresponding to a mounting section formed in the cabinet and fixes a plurality of LCDs to a common cabinet by selectively using the fittings for different LCDs. Furthermore, Japanese Patent Laid-Open Publication No.2002-287118 (Patent Document 2) discloses a liquid crystal display panel mounting device that attaches, when attaching a standard liquid crystal display panel and reduced liquid crystal display panel which is smaller than this to a common cabinet, a rotatable lug to the reduced liquid crystal display panel, rotates this lug as appropriate so as to screw the lug attached to the reduced liquid crystal display panel to a boss which fixes the standard liquid crystal display panel.

However, the structure as described in Patent Document 1 that a plurality of LCDs of different mounting specifications are fixed to a common cabinet using LCD screw holes and a plurality of types of fittings corresponding to the mounting section formed in the cabinet requires special-purpose fittings for different LCDs, which not only causes an increase in production costs but also requires troublesome parts management as the number of parts increases. On the other hand, the structure described in Patent Document 2 that rotates the lug attached to the reduced liquid crystal display panel in a rotatable manner according to the boss that fixes the standard liquid crystal display panel can fix the standard liquid crystal display panel and reduced liquid crystal display panel to a common cabinet, fix two types of large/small liquid crystal display panels with an additional lug and reduce the number of parts compared to the structure in Patent Document 1, but fixing the reduced liquid crystal display panel requires at least four lugs to fix at least all the corners of the LCD, which still leads to an increase in the number of parts and since the screw is loosened when mounting and the lug is attached to the reduced liquid crystal display panel in a rotatable manner, the position of the reduced liquid crystal display panel with respect to the cabinet is variable and it is troublesome to align the reduced liquid crystal display panel with the cabinet.

There is a demand for a more compact liquid crystal display device in recent years and the outer shape of an LCD is being increasingly downsized in response to this demand in the market. One example of this is a widely used so-called "side mount system" which directly forms fixing screw holes on one side of an LCD, screwing the screws into the screw holes to thereby avoid any fixing protruding pieces and the like from sticking out of the side. On the other hand, there is a demand for a thinner LCD. For this reason, for an extremely thin LCD, it may be rather more convenient not to directly provide screw holes on one side of the LCD from the aspects of strength and dimensions. Such a thin LCD has a folded lug having a screw hole on one side of the LCD, which protrudes in a direction in which enough space is available. For example, a liquid crystal display device for a personal computer or television receiver has a horizontally oriented rectangular display screen and speaker sections disposed on the right and left sides of the LCD which is the display screen, and therefore the folded lug is often disposed in such a way as to protrude from the right and left sides, that is, in the short side direction of the horizontally oriented rectangular LCD. Thus, recent liquid crystal display devices can be roughly divided into two types according to the thickness of the LCD; type that screw holes are directly formed on one side of the LCD and type that folded lugs are disposed in such a way as to protrude in the short side direction of the LCD. However, the liquid crystal display panel mounting structures disclosed in the aforementioned Patent Document 1 and Patent Document 2 do not allow the plurality of liquid crystal display panels to be fixed to a common mounting cover.

### SUMMARY OF THE INVENTION

The present invention has been implemented in view of the above described problems and it is an object of the present invention to provide a versatile and excellent liquid crystal display device capable of fixing a plurality of liquid crystal displaypanels of different mounting specifications to amounting cover without increasing the number of parts.

A liquid crystal display device according to the first aspect of the invention is a liquid crystal display device which fixes any one liquid crystal display panel selected from a plurality of liquid crystal display panels to a mounting cover fixed to the inner side of a cabinet, comprising amounting section capable of mounting the plurality of liquid crystal display panels onto the mounting cover, characterized in that the plurality of liquid crystal display panels of different mounting specifications are constructed so as to be fixed by the common mounting cover.

According to the structure of the first aspect of the invention, the mounting cover is provided with a plurality of mounting sections corresponding to a plurality of liquid crystal display panels, and therefore it is possible to fix any one of the different liquid crystal display panels to the mounting cover and fix any one of the liquid crystal display panels of different mounting specifications into the cabinet through this mounting cover.

The liquid crystal display device according to the second aspect of the invention is the liquid crystal display device according to the first aspect of the invention, characterized in that the plurality of liquid crystal display panels comprise a first liquid crystal display panel, a second liquid crystal display panel, and a third liquid crystal display panel having substantially the same outer shape and differing from one another in thickness, when the first liquid crystal display panel is attached to the mounting cover, a protruding folded lug is provided on one side of the first liquid crystal display panel, a mounting piece contacting the folded lug in which a first screw hole is formed in the mounting cover by being folded as a piece integral therewith, a fixing screw is passed through a first insertion hole provided in this folded lug so as to be screwed into the first screw hole, when the second liquid crystal display panel instead of the first liquid crystal display panel is attached to the mounting cover, a fixing screw is passed through a second insertion hole formed at one end of the mounting cover, screwed into a second screw hole provided on one side of the second liquid crystal display panel, and when the third liquid crystal display panel instead of the first liquid crystal display panel or the second liquid crystal display panel is attached to the mounting cover, one end of a hollow cylindrical member is attached to a flat plate of the mounting cover, the cylindrical member is passed through a mounting hole provided in the third liquid crystal display panel and fixed to the third liquid crystal display panel by screwing a fixing screw into a third screw hole formed inside the cylindrical member.

The structure according to the second aspect allows the first liquid crystal display panel, the second liquid crystal display panel and the third liquid crystal display panel differing from one another in thickness to be selected and attached to a common mounting cover, and thereby eliminates the necessity to provide mounting covers corresponding to the respective liquid crystal display panels, which provides excellent versatility.

The liquid crystal display device according to the third aspect of the invention is the liquid crystal display device according to the second aspect of the invention, characterized in that the material of the cylindrical member is brass.

Brass according to the structure according to the third aspect of the invention, which is an alloy of copper and zinc has a yellow color, which facilitates and assures visual recognition of the cylindrical member when the third liquid crystal display panel is attached to the mounting cover, making it possible to perform mounting work reliably and smoothly and thus providing excellent workability. Furthermore, using brass as the material of the cylindrical member improves rust-proofing characteristics and provides excellent durability.

The liquid crystal display device according to the fourth aspect of the invention is the liquid crystal display device according to the second or the third aspect of the invention, characterized in that one end of the cylindrical member is fixed by being swaged to a hole formed in the flat plate.

According to the structure according to the fourth aspect of the invention, when the cylindrical member is fixed by being swaged to the hole in the flat plate, since the cylindrical member is a brass member, which can be easily machined, the cylindrical member can be easily fixed to the hole, which provides excellent workability and improves productivity.

The liquid crystal display device according to the first aspect of the invention is the liquid crystal display device which fixes any one liquid crystal display panel selected from a plurality of liquid crystal display panels to a mounting cover fixed to the inner side of a cabinet, comprising amounting section capable of mounting the plurality of liquid crystal display panels onto the mounting cover, characterized in that the plurality of liquid crystal display panels of different mounting specifications are constructed so as to be fixed by the common mounting cover, and any of the different liquid crystal display panels can be fixed to the mounting cover, which provides excellent versatility and can also reduce the number of parts and thereby facilitates parts control and also provides excellent cost effectiveness.

The liquid crystal display device according to the second aspect of the invention is the liquid crystal display device according to the first aspect of the invention, characterized in that the plurality of liquid crystal display panels comprise a first liquid crystal display panel, a second liquid crystal display panel, and a third liquid crystal display panel having substantially the same outer shape and differing from one another in thickness, when the first liquid crystal display panel is attached to the mounting cover, a protruding folded lug is provided on one side of the first liquid crystal display panel, a mounting piece contacting the folded lug in which a first screw hole is formed in the mounting cover by being folded as a piece integral therewith, a fixing screw is passed through a first insertion hole provided in this folded lug so as to be screwed into the first screw hole, when the second liquid crystal display panel instead of the first liquid crystal display panel is attached to the mounting cover, a fixing screw is passed through a second insertion hole formed at one end of the mounting cover, screwed into a second screw hole provided on one side of the second liquid crystal display panel, and when the third liquid crystal display panel instead of the first liquid crystal display panel or the second liquid crystal display panel is attached to the mounting cover, one end of a hollow cylindrical member is attached to a flat plate of the mounting cover, the cylindrical member is passed through a mounting hole provided in the third liquid crystal display panel and fixed to the third liquid crystal display panel by screwing a fixing screw into a third screw hole formed inside the cylindrical member, which allows the first liquid crystal display panel, the second liquid crystal display panel, and third liquid crystal display panel differing from one another in thickness to be selected and attached to a common mounting cover, and thereby eliminates the necessity to provide mounting covers corresponding to the respective liquid crystal display panels, which provides excellent versatility and at the same time makes it possible to save the die manufacturing cost and remodeling cost, reduce the number of parts, facilitate parts control and provide excellent mounting workability.

The liquid crystal display device according to the third aspect of the invention is the liquid crystal display device according to the second aspect of the invention, characterized in that the material of the cylindrical member is brass and brass which is an alloy of copper and zinc has a yellow color, which provides excellent visibility and allows smooth mounting work and improves workability. Furthermore, using brass as the material of the cylindrical member improves rust-proofing characteristics and provides excellent durability.

The liquid crystal display device according to the fourth aspect of the invention is the liquid crystal display device according to the second or the third aspect of the invention, characterized in that one end of the cylindrical member is fixed by being swaged to a hole formed in the flat plate, and when the cylindrical member is fixed by being swaged to the hole in the flat plate, since the cylindrical member is a brass member which can be easily machined, the cylindrical member can be easily fixed to the hole, which facilitates the fixing of the cylindrical member to the hole and improves productivity.

### BRIEF DESCRIPTION OF THE DRAWINGS

FIG. 1 is an exploded perspective view of a mounting cover and a first liquid crystal display panel;
FIG. 2 is an exploded perspective view of a mounting cover and a second liquid crystal display panel according to the present invention;
FIG. 3 is an exploded perspective view of a mounting cover and a third liquid crystal display panel according to the present invention;
FIG. 4 is a side view when the first liquid crystal display panel according to the present invention is attached to the mounting cover;
FIG. 5 is a side view when the second liquid crystal display panel according to the present invention is attached to the mounting cover;
FIG. 6 is a side view when the third liquid crystal display panel according to the present invention is attached to the mounting cover;
FIG. 7 is a partial cutout cross-sectional view of the third liquid crystal display panel according to the present invention;
FIG. 8 is schematic diagram showing steps of fixing the cylindrical member to the mounting cover by swaging according to the present invention;
FIG. 9 is an exploded perspective view showing the entire liquid crystal display device according to the present invention; and
FIG. 10 is a perspective view showing the entire liquid crystal display device according to the present invention.

### DETAILED DESCRIPTION OF THE PREFERRED EMBODIMENTS

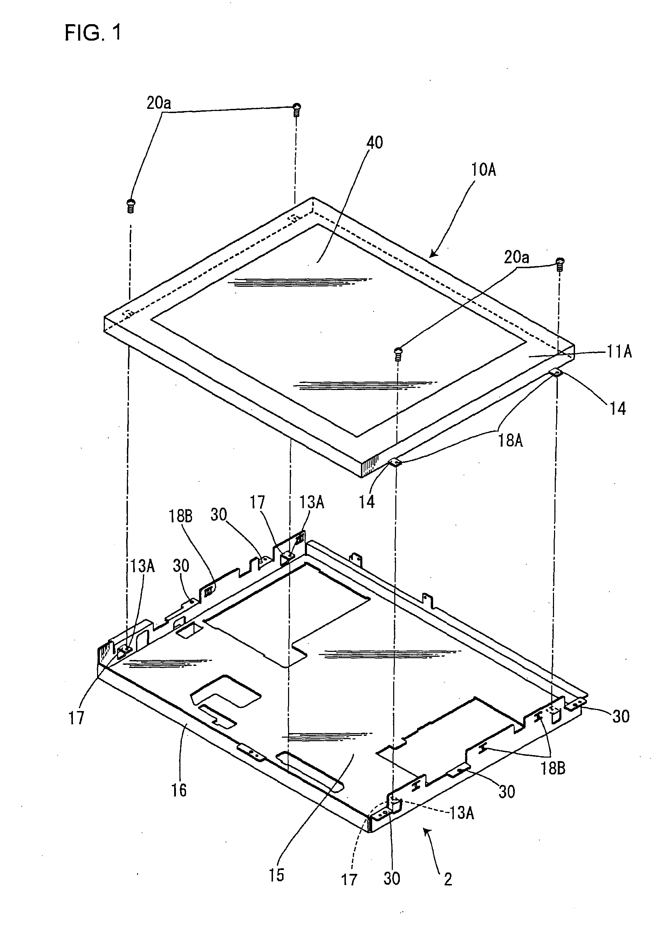

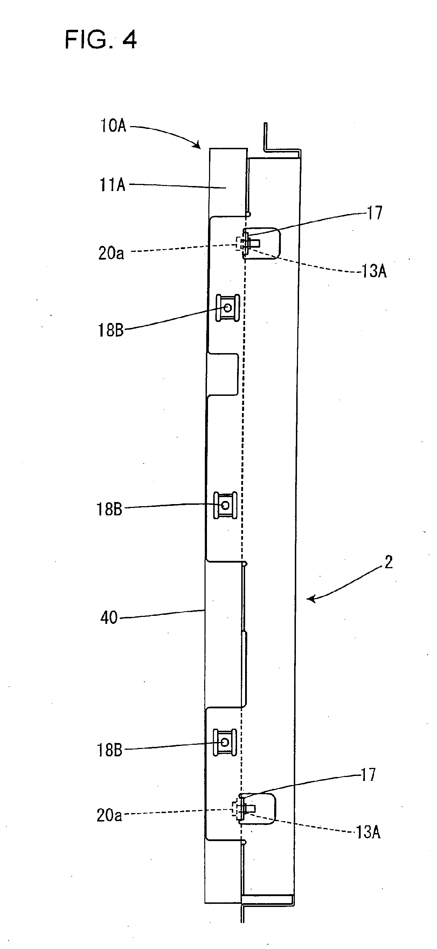

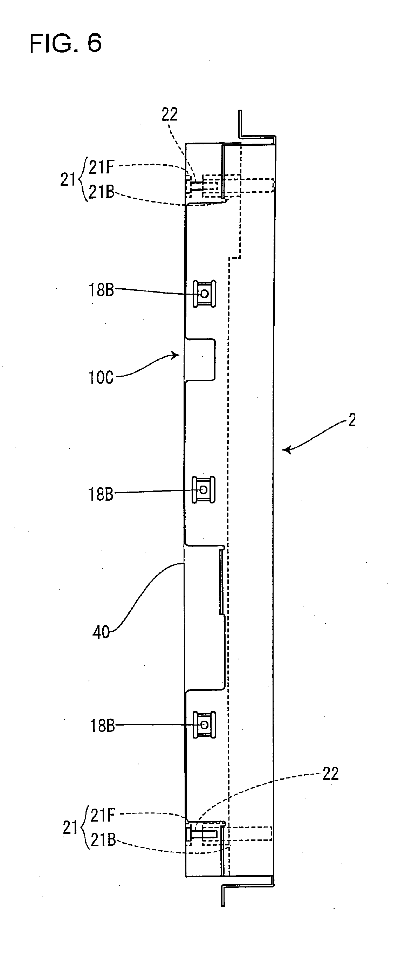

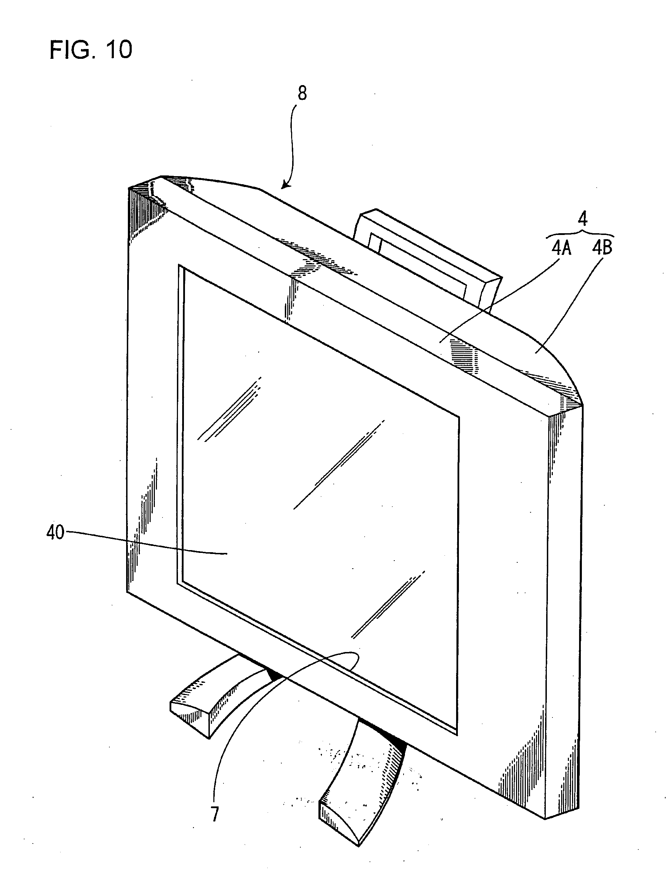

With reference now to FIGS.1 to 10, one preferred embodiment of implementing the present invention will be explained below.

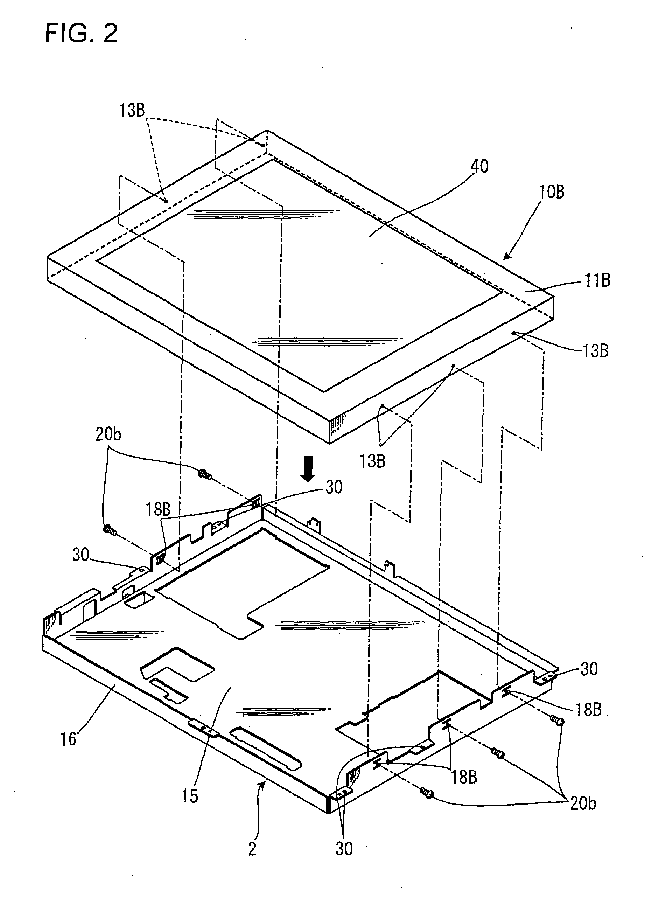

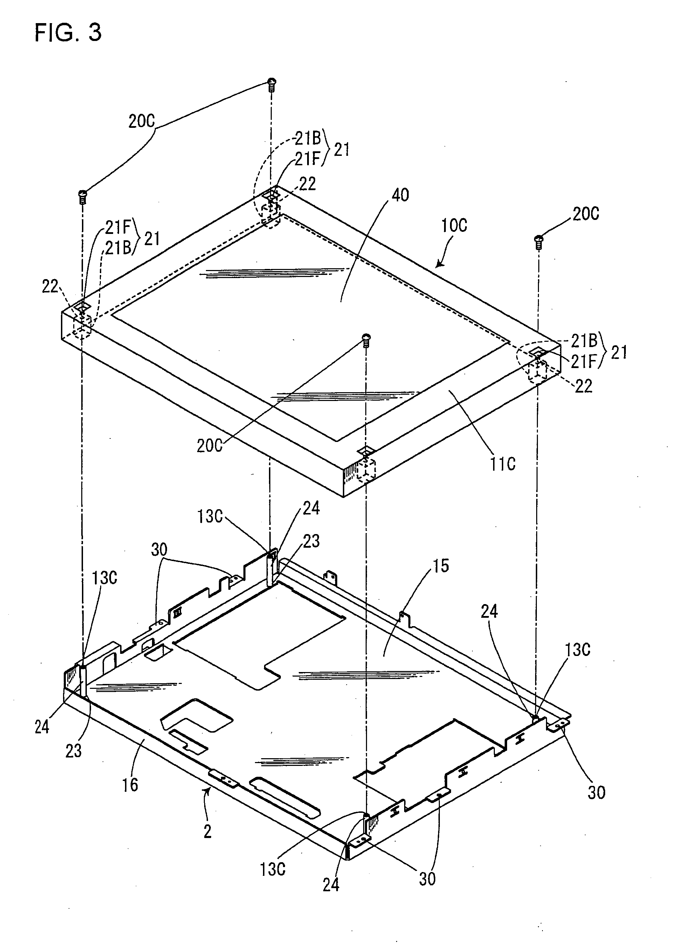

FIG.1 is an exploded perspective view of a first liquid crystal display panel and a mounting cover, FIG. 2 is an exploded perspective view of a second liquid crystal display panel and a mounting cover, and FIG. 3 is an exploded perspective view of a third liquid crystal display panel and a mounting cover.

Reference number 1 denotes a liquid crystal panel unit of the present invention and this liquid crystal panel unit 1 is constructed of three types of a first liquid crystal display panel 10A, a second liquid crystal display panel 10B, and a third liquid crystal display panel 10C of different mounting specifications, a mounting cover 2 for fixing these liquid crystal display panels to a cabinet which will be described later and a circuit substrate (not shown) fixed to this mounting cover 2 and the like.

The first, the second, and the third liquid crystal display panels 10A, 10B, and 10C are each provided with a liquid crystal display element body (not shown) and a metal panel fixing frame 11A, 11B, and 11C which covers the perimeter of this liquid crystal display element body from the back side thereof.

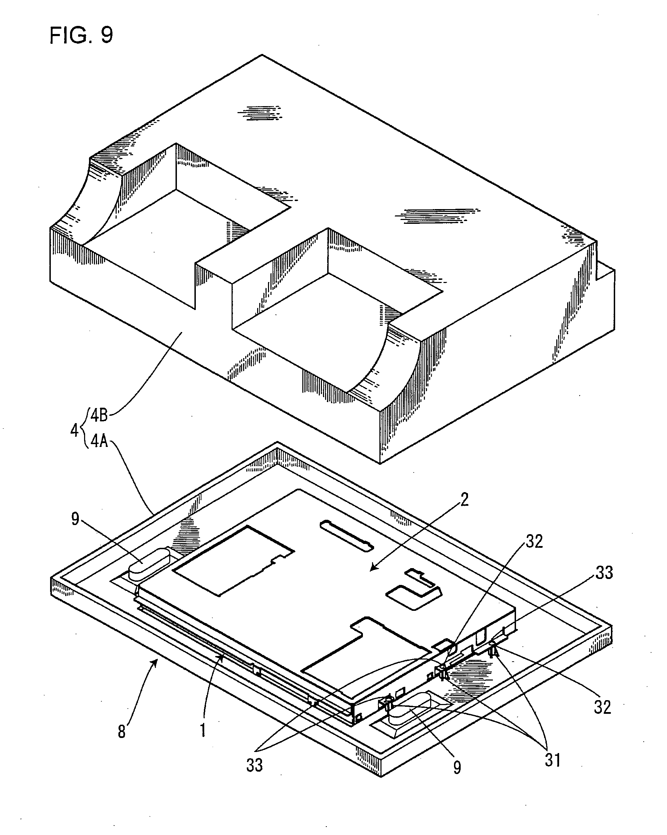

In this embodiment, the first, the second, and the third liquid crystal display panels 10A, 10B, and 10C are incorporated in a cabinet 4 of a television receiver as a display screen of the television receiver which is a liquid crystal display device 8. This cabinet 4 can be divided into front and back portions, that is, a front cabinet 4A and a back cabinet 4B. Any one selected from among the first, the second, and the third liquid crystal display panels 10A, 10B, and 10C is fixed to the front cabinet 4A having a display window 7 and as shown in FIG.9, a pair of speakers 9, 9 are attached to the front cabinet 4A on both the right and left sides of the fixed first, second, and third liquid crystal display panel 10A, 10B, and 10C. The dimensional standard of a display device of the first, the second, and the third liquid crystal display panel 10A, 10B, and 10C incorporated in the front cabinet 4A are related to the size of the display surface, and therefore they have substantially the same shape and size and are formed into a horizontally oriented rectangular box. In the aspect of thickness, however, there is no unified standard and the thickness often varies from one liquid crystal display panel to another. This embodiment will describe a case where the thickness increases in order of the first liquid crystal display panel 10A, second liquid crystal display panel 10B, and third liquid crystal display panel 10C. These LCDs 10A, 10B, and 10C also have different mounting specifications, and in many cases, a plurality of (four in many cases) folded lugs are generally formed protruding from the back surface of the panel fixing frame and mounting screw holes are formed in those folded lugs or a plurality of (four in many cases) screw holes are formed in side faces (side faces in the longitudinal direction in many cases) of the panel fixing frame.

In the three different methods of mounting the LCDs 10A, 10B, and 10C which will be explained as an embodiment, a panel fixing frame 11A which covers the first liquid crystal display panel 10A which is the thinnest of the three LCDs 10A, 10B, and 10C, is provided with folded lugs 14 each having a first insertion hole 18A which serve as the fixing positions of the first liquid crystal display panel 10A and protrude in the longitudinal direction which is the horizontal direction of the panel fixing frame 11A on both facing sides thereof as shown in FIG.1.

On the other hand, a panel fixing frame 11B of the second liquid crystal display panel 10B which is thicker than the first liquid crystal display panel 2 is provided with a pair of second screw holes 13B which serve as the fixing positions of the second liquid crystal display panel 10B on both facing sides thereof in the longitudinal direction as shown in FIG.2.

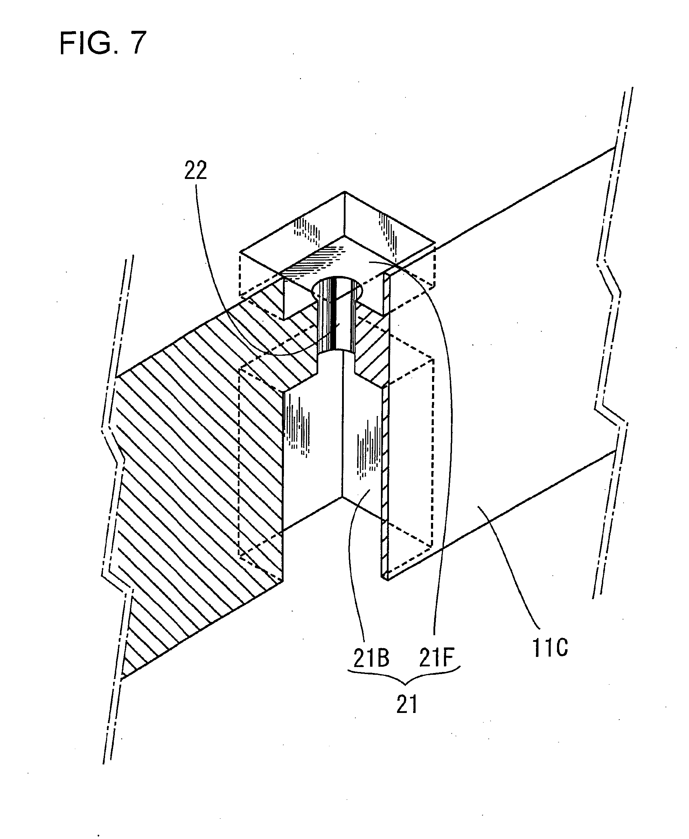

Furthermore, a panel fixing frame 11C of the third liquid crystal display panel 10C which is thicker than the second liquid crystal display panel 10B has openings 21 which are opened in four corners in the vicinity of the corners of the panel fixing frame 11C in the back-and-forth direction (vertical direction shown in FIG.3) as shown in FIG.3. As shown in a partially cutout cross-sectional view in FIG.7, this opening 21 is made up of a front opening 21F formed on the front of the panel fixing frame 11C and a back opening 21B formed on the back of the panel fixing frame, and amountinghole 22 which communicates the front opening 21F and the back opening 21B.

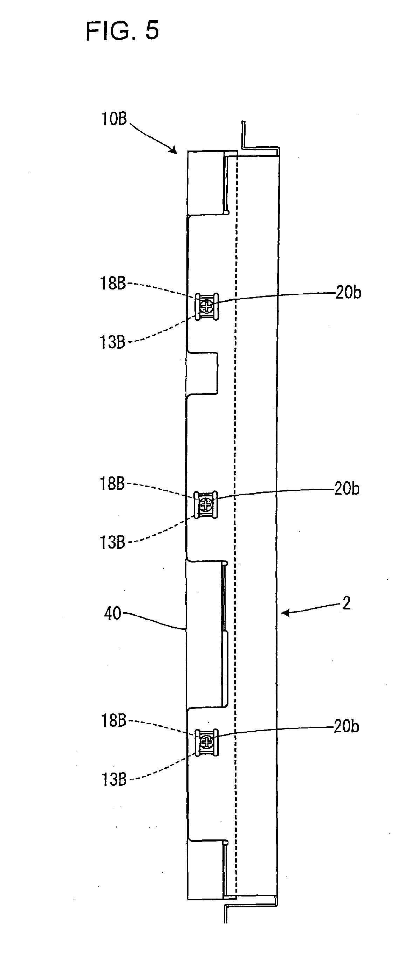

Here, the mounting cover 2 is created from a thin plate made of a metal material by bending the thin plate and a perimeter wall 16 is formed by bending the edges of a flat plate 15 of the mounting cover 2 at right angles so as to cover the perimeter from the back side of each LCD of the first, the second, and the third liquid crystal display panel 10A, 10B, and 10C. On the perimeter wall 16 formed in the mounting cover 2, mounting lugs 17 which contact the folded lugs 14 of the first liquid crystal display panel 10A are formed by being folded in such a way as to face each other in the longitudinal direction of the perimeter wall 16 as pieces integral therewith. First screw holes 13A corresponding to the first insertion holes 18A are formed in this mounting lugs 17 and second insertion holes 18B are formed at the positions corresponding to the second screw holes 13B of the second liquid crystal display panel 10B at one end in the longitudinal direction of the mounting cover 2 as shown in FIG.2 and FIG.5.

Then, when the first liquid crystal display panel 10A is selected and attached to the mounting cover 2, fixing screws 20a are passed through the first insertion holes 18A and screwed into the first screw holes 13A formed in the mounting lugs 17.

On the other hand, when the second liquid crystal display panel 10B is selected, the fixing screws 20b are passed through the second insertion holes 18B, screwed into the second screw holes 13B and the second liquid crystal display panel 10B is attached to the mounting cover 2.

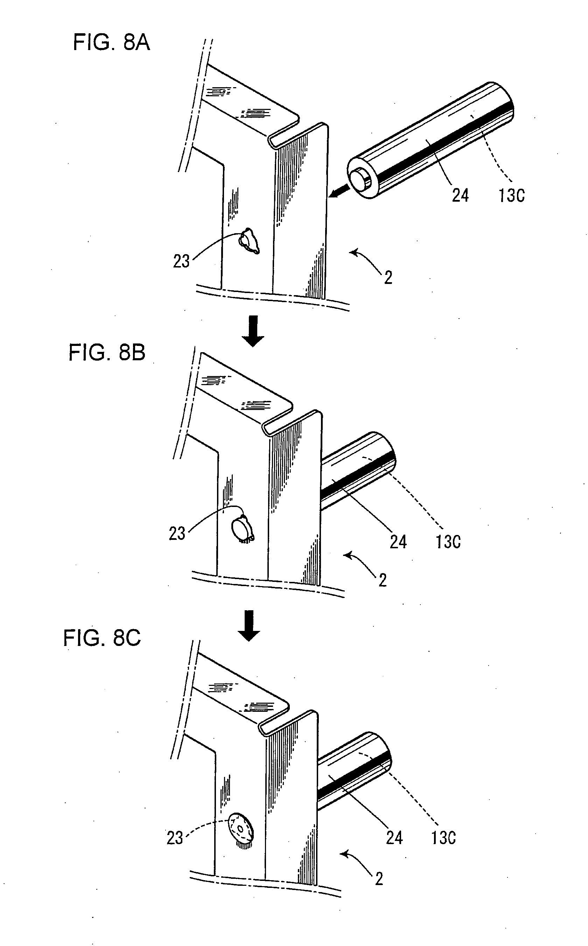

Furthermore, when the third liquid crystal display panel 10C is selected, as shown in FIG. 3 and FIG. 8, holes 23 are formed at the positions of the mounting cover 2 so as to correspond to the mounting holes 22 in the four corners of the flat plate 15 of the mounting cover 2, a hollow cylindrical member 24 is passed through the hole 23 in order of (a) to (c) in FIG.8 and one end of the cylindrical member 24 is fixed by being swaged to the hole 23. Inside the cylindrical member 24, a third screw hole 13C is formed and when the third liquid crystal display panel 10C is attached to the mounting cover 2, one end of the cylindrical member 24 attached to the mounting cover 2 is passed through the back opening 21B of the third liquid crystal display panel 10C and passed up to the mounting hole 22. Then, by screwing the fixing screws 20c from the front openings 21F into the third screw holes 13C, it is possible to attach the third liquid crystal display panel 10C to the mounting cover 2. This makes it possible to fix any one liquid crystal display panel selected from among the first, the second, or the third liquid crystal display panels 10A, 10B, or 10C as required to the mounting cover 2 through screw holes and the like which are mounting sections using fixing screws and to fix any selected one of the first, the second, or the third liquid crystal display panel 10A, 10B, or 10C to the front cabinet 4A by fixing the mounting cover 2 to the front cabinet 4A.

Next, the method of fixing each of the first, the second, or the third liquid crystal display panels 10A, 10B, 10C to the front cabinet 4A using the mounting cover 2 will be explained.

First, the method of fixing the thin first liquid crystal display panel 10A will be explained. In fixing the first liquid crystal display panel 10A to the front cabinet 4A, the first liquid crystal display panel 10A is fixed to the mounting cover 2. That is, as shown in FIG.1, the first liquid crystal display panel 2 is fixed to the mounting cover 4 by aligning the first screw holes 13A formed in the mounting lugs 17 of the mounting cover 2 with the first insertion holes 18A formed in the folded lugs 14 of the first liquid crystal display panel 10A, passing the fixing screws 20a through the second screw holes 18B and screwing the screws 20a into the first screw holes 10.

Next, the first liquid crystal display panel 10A fixed to the mounting cover 2 is disposed inside the front cabinet 4A so that the display surface 40 thereof faces the display window 7 of the front cabinet 4A. Then, the first liquid crystal.display panel 10A is fixed to the front cabinet 4A by aligning holes 30 formed in the mounting cover 2 with screw holes 32 formed in the mounting bosses 31 in the front cabinet 4A, passing screws 33 through the holes 30 and screwing the screws into the mounting bosses 31.

Furthermore, when either the second liquid crystal display panel 10B or the third liquid crystal display panel 10C which is thicker than the first liquid crystal display panel 10A is fixed to the front cabinet 4A, the liquid crystal display panel is attached to the mounting cover 2 using substantially the same procedure as that for the first liquid crystal display panel 2 , and therefore explanations thereof will be omitted. However, this embodiment allows the liquid crystal display panels having different structures, that is, the plurality of the first, the second, and the third liquid crystal display panels 10A, 10B, and 10C to be attached to the mounting cover 2 by simply providing the mounting lugs 17, cylindrical members 24, screw holes, and the like, through simple work as required, and can thereby provide excellent versatility. Furthermore, the material of the cylindrical member 24 is brass, which is an alloy of copper and zinc, having a yellow color, which gives good visibility when the third liquid crystal display panel 10C is attached to the mounting cover 2 and assures the mounting work. Moreover, the use of brass as the material of the cylindrical member further facilitates work, and provides a good rust-proofing characteristic and excellent durability.

As described above, the liquid crystal display device in this embodiment is the liquid crystal display device which selects any one from among the plurality of liquid crystal display panels 10A, 10B, and 10C and fixes the liquid crystal display panel to the mounting cover 2 to be fixed inside the cabinet 4 and includes the mounting sections such as the first, the second, or the third screw holes 13A, 13B, or 13C and the like, which allow the plurality of liquid crystal display panels 10A, 10B, and 10C to be attached to the mounting cover 2 so that the plurality of liquid crystal display panels 10A, 10B, and 10C of different mounting specifications can be fixed by the common mounting cover 2, and since the mounting cover 2 is provided with a plurality of mounting sections corresponding to the plurality of liquid crystal display panels 10A, 10B, and 10C, any one of the different liquid crystal display panels 10A, 10B, and 10C can be fixed to the mounting cover 2 and any one of the liquid crystal display panels 10A, 10B, and 10C of different specifications can also be fixed to the inner side of the cabinet through this mounting cover 2. This provides excellent versatility and can reduce the number of parts, thereby facilitate parts control and provide excellent cost efficiency. Furthermore, the plurality of liquid crystal display panels consist of the first liquid crystal display panel 10A, the second liquid crystal display panel 10B which has substantially the same outer shape as that of this first liquid crystal display panel 10A and is thicker than the first liquid crystal display panel 10A and the third liquid crystal display panel 10C which has substantially the same outer shape as that of the first liquid crystal display panel 10A and is thicker than the second liquid crystal display panel 10B. That is, the plurality of liquid crystal display panels consist of the first liquid crystal display panel 10A, the second liquid crystal display panel 10B, and the third liquid crystal display panel 10C having substantially the same outer shape and different thicknesses, and when the first liquid crystal display panel 10A is attached to the mounting cover 2, the folded lugs 14 are provided in such a way as to protrude from one side of the first liquid crystal display panel 10A, the mounting lugs 17 in which the first screw holes 13A are formed, contacting the folded lugs 14 are formed by being bent in the mounting cover 2 integral therewith, in the first insertion hole 18A provided in the folded lugs 14, the fixing screws 20a are passed through the first insertion holes 18A, screwed into the first screw holes 13A, and when the second liquid crystal display panel 10B instead of the first liquid crystal display panel 10A is attached to the mounting cover 2, the fixing screws 20b are passed through the second insertion holes 18B formed at one end of the mounting cover 2, screwed into the second screw holes 13B provided on one side of the second liquid crystal display panel 10B, and when the third liquid crystal display panel 10C instead of the first liquid crystal display panel 10A or second liquid crystal display panel 10B is attached to the mounting cover 2, one end of the hollow cylindrical member 24 is attached to the flat plate 15 of the mounting cover 2, these cylindrical members 24 are passed through the mounting holes 22 provided in the third liquid crystal display panel 10C and the fixing screws 20c are screwed into the third screw holes 13C formed in the cylindrical members 24 of the third liquid crystal display panel 10C. The invention allows the first liquid crystal display panel 10A, the second liquid crystal display panel 10B or the third liquid crystal display panel 10C differing from one another in thickness to be selected and attached to the common mounting cover 2, can thereby eliminate the necessity for providing mounting covers corresponding to the respective liquid crystal display panels and thereby provide excellent versatility and save costs with respect to the die manufacturing cost and remodeling cost and reduce the number of parts, which facilitates parts control and provides excellent mounting workability. Furthermore, since brass is used as the material of the cylindrical member 24 and the color of brass which is an alloy of copper and zinc is yellow, when the third liquid crystal display panel 10C is attached to the mounting cover 2, it is possible to easily check the cylindrical member 24 visually, carry out mounting work reliably and smoothly, improve workability and the use of brass as the material of the cylindrical member 24 provides an excellent rust-proofing characteristic and durability. Furthermore, one end of the cylindrical member 24 is fixed by being swaged to the hole 23 formed in the flat plate 15 and when the cylindrical member 24 is fixed by being swaged to the hole 23 of the flat plate 15, since the cylindrical member 24 is a brass material which can be easily worked, it is possible to facilitate the fixing of the cylindrical member 24 to the hole 23, provide excellent workability and thereby improve productivity.

An embodiment of the present invention has been described in detail so far, but the present invention is not limited to the foregoing embodiment and can be modified in various ways within the scopes of the essence of the present invention. For example, the foregoing embodiment has shown an example where the present invention is applied to a television receiver, but the present invention is not limited to the television receiver and is widely applicable to various types of liquid crystal display devices such as notebook, desktop personal computer, or portable type information terminal device. Furthermore, the shape of the mounting cover 2 and the like, is not limited to the above described embodiment and can be selected as appropriate.

## Claims

1. A liquid crystal display device which fixes any one liquid crystal display panel selected from a plurality of liquid crystal display panels to a mounting cover fixed to the inner side of a cabinet, comprising a mounting section capable of mounting the plurality of liquid crystal display panels onto the mounting cover, **characterized in that** the plurality of liquid crystal display panels of different mounting specifications are constructed so as to be fixed by the common mounting cover.

2. The liquid crystal display device according to claim 1, **characterized in that** the plurality of liquid crystal display panels comprise a first liquid crystal display panel, a second liquid crystal display panel and a third liquid crystal display panel having substantially the same outer shape and differing from one another in thickness,
when the first liquid crystal display panel is attached to the mounting cover, a protruding folded lug is provided on one side of the first liquid crystal display panel, a mounting piece contacting the folded lug in which a first screw hole is formed in the mounting cover by being folded as a piece integral therewith, a fixing screw is passed through a first insertion hole provided in this folded lug so as to be screwed into the first screw hole,
when the second liquid crystal display panel instead of the first liquid crystal display panel is attached to the mounting cover, a fixing screw is passed through a second insertion hole formed at one end of the mounting cover, screwed into a second screw hole provided on one side of the second liquid crystal display panel, and
when the third liquid crystal display panel instead of the first liquid crystal display panel or second liquid crystal display panel is attached to the mounting cover, one end of a hollow cylindrical member is attached to a flat plate of the mounting cover, the cylindrical member is passed through a mounting hole provided in the third liquid crystal display panel and fixed to the third liquid crystal display panel by screwing a fixing screw into a third screw hole formed inside the cylindrical member.

3. The liquid crystal display device according to claim 2, **characterized in that** the material of the cylindrical member is brass.

4. The liquid crystal display device according to claim 2 or claim 3, **characterized in that** one end of the cylindrical member is fixed by being swaged to a hole formed in the flat plate.
